# EUROPEAN PATENT APPLICATION

(11) **EP 1 041 124 A1**
(43) Date of publication of application: **04.10.2000**
(21) Application number: 00201171.6
(22) Date of filing: 30.03.2000
(51) Int. Cl.: C09D 5/03

(54) **Pigment-containing powder coating composition**

(30) Priority: 01.04.1999 NL 1011717
(71) Applicant: Holland Colours N.V., NL-7323 RW Apeldoorn (NL)
(72) Inventor: Ubbink, Marten Theodoor, 7311 BK Apeldoorn (NL); Noordegraaf, Ferdinand, 7322 BM Apeldoorn (NL)
(74) Representative: van der Kloet-Dorleijn, Geertruida W.F., Drs.

(57) **Abstract**

The invention relates to a pigment-containing, thermosetting powder coating composition which contains at least one type of pigment having a special effect and is produced by blending comminuted particles of a thermosetting resin, a hardener, customary additives and fillers, and the said pigment or a preparation containing the pigment, subjecting the blend thus obtained to extrusion at elevated temperature and then carrying out a cooling operation to obtain an extrudate, followed by crushing, grinding and screening said extrudate to obtain the said powder coating composition, wherein the blend to be extruded further includes a resin-free carrier which protects the pigment having the special effect and is not agglomerated with the pigment. The said pigments, in particular, are the lamellar pigments such as metal flakes and mica pigments. The carrier protects the pigment during extrusion; it preferably has a softening point of at least 40°C and at most 145°C. Also described are a pigment preparation and a method for preparing it.

## Description

The invention relates to a pigment-containing, thermosetting powder coating composition. Paints of this type are applied by fluidized-bed coating or electrostatic spraying. Then the product thus coated is stoved, the powder applied as a thin layer thereby being converted into a homogeneous film.

Powder paints are formed by a pigment or colorant being blended with a thermosetting coating system (consisting of a resin and a hardener) and additives and/or fillers. The resulting blend is then homogeneously fused in an extrusion apparatus and is extruded. The extrudate is then cooled to room temperature as quickly as possible and is finely ground so as to obtain a powder which can be used as a powder paint.

A production process of this type is not suitable, however, for pigments which have special effects, such as light effects or are electrically conductive. This is because such pigments, when fused and subjected to high shear forces in the extrusion apparatus are physically altered in such a way that the desired effects are not obtained or at least to a considerably lesser degree.

The pigments having special effects, in particular light effects, are metallic pigments, on the one hand, customarily being dispersed in metal pigments, for example aluminium, copper, tin, bronze, in the form of flakes, and mica pigments on the other hand, which consist of thin laminae of mica which are coated with, for example, titanium dioxide and/or iron(III) oxide, although coating with chromium(III) oxide, for example, is an alternative option.

Of course, such pigments can have a synthetic base, instead of a natural base such as in the case of mica.

Among the metal pigments, aluminium pigments are often used. They are able to impart a marked metallic gloss, and also a hammer finish effect, to the product coated with the powder paint and hardened.

Mica pigments impart a mother-of-pearl effect to the product coated with the powder paint and hardened, presumably because of their high refractive index and transparency in addition to their flat structure.

With these pigments, in particular the mica pigments, it is important that the pigment laminae will align in substantially the same direction, parallel to, and preferably as close as possible to, the surface layer of the coating film.

Only then can the light be reflected in a preferential direction instead of being diffused. A pigment which has a light interference effect and whose laminae are ordered randomly or which is a fine powder produces the same effect as an ordinary white powder when used in a powder coating composition. So as to allow the pigments having a light interference effect to be used in powder coating compositions while retaining their light interference effect, a number of processes have previously been proposed in the art.

The first instance to be pointed out is the so-called "dry blending" process. In this process, the constituents of a powder coating composition, i.e. resin, hardener, additives, pigments and fillers, are blended together, subjected to extrusion, followed by crushing, grinding and screening, whereupon the powder coating composition is blended with the pigments having a light interference effect. Thereupon, the blend is ready for use.

The drawback of this process is that it does indeed afford good results on a small scale (e.g. for laboratory or testing purposes) by providing an indication regarding the potential of a particular pigment, but that in a large-scale production process the powder blend tends to segregate, resulting in inhomogeneous coatings being formed.

The segregation problem is a significant factor especially in those cases, where there is a desire for the "overspray" to be re-used and therefore to be recycled into the system. This "overspray" then has to be blended with a certain quantity of fresh powder paint blend. The blend thus formed may, however, have a composition different from that of the blend used in the first place (poor reproducibility).

It should be noted that the term "overspray" refers to the amount of paint which does not reach the substrate to be coated. Even though electrostatic atomization of powder coatings results in a considerably smaller amount of "overspray" than is produced by atomization under pressure, the "overspray" usually has to be re-used as much as possible, because of potential pollution of the environment.

A second instance to be pointed out is the so-called "bonding" process. In outline, a process of this type amounts to resin, crosslinking agent, additives, fillers and possibly pigments which do not lose their effect as a result of the various process operations being blended, the blend being extruded, followed by crushing, grinding and screening. The pigment having a light interference effect is employed in such a composition by the pigment having a light interference effect being blended with the powder coating composition and the blend being subjected to an aftertreatment, in which the pigment having a light interference effect is intimately (i.e. directly) bonded to the powder coating. The pigment agglomerate thus obtained is used to form a powder paint coating. Having been applied as a thin layer and to a substrate, the particles having a light interference effect will be released as soon as the powder coating composition begins to melt during the baking process. An example of such a process is described in US-A-5,470,893.

In a "bonding" process of this type, the overspray can be recycled into the system without any problems. However, since a melting stage using thermosetting resin is required to agglomerate the pigments having a light interference effect, the process is rather expensive.

A final instance to be pointed out is the extrusion method. In this method, all the constituents, i.e. resin, crosslinking agent, additives, fillers and pigments (of any type desired) are blended together, the blend is extruded, followed by crushing, grinding and screening. Whilst this method is sometimes used for aluminium flakes or mica pigments, the effect obtained is not optimal, as the shape of the pigments during the various processing operations is damaged.

We have now found a pigment-containing, thermosetting powder coating composition containing at least one pigment having a special effect, which composition does not have the abovementioned drawbacks.

More in particular, the powder coating composition is produced, according to the invention, by blending comminuted particles of a thermosetting resin, a hardener, customary additives and fillers, and the said pigment or a preparation containing the pigment, subjecting the blend thus obtained to extrusion at elevated temperature and then carrying out a cooling operation to obtain an extrudate, followed by crushing, grinding and screening said extrudate to obtain the said powder coating composition, wherein the blend to be extruded further includes a resin-free carrier which protects the pigment having the special effect and is not agglomerated with the pigment.

Preferably, the pigment having the special effect, which is to be used according to the invention, is a lamellar pigment, more particularly, selected from the group consisting of metal flakes and mica pigments. The pigment having the special effect is in particular a pigment having light interference effect or a pigment which is electrically conductive.

Examples to be mentioned of the metal pigment include aluminium flakes, both of the so-called "leafing" type and of the "non-leafing" type, stainless-steel flakes and bronze flakes.

However, the invention is not limited to the pigments mentioned by name hereinabove. In principle, any pigment which can be damaged when processed in an extruder or similar apparatus can be used in a composition according to the invention.

According to a preferred embodiment of the powder paint composition according to the invention, the resin-free carrier which protects the pigment having the special effect and is not agglomerated with the pigment is a waxy compound, in particular a waxy compound having a softening point of at least 40°C and at most 145°C.

It is observed that a waxy compound is, within the scope of the present invention, to be understand as being a compound, which has the following properties:
- is solid at 20°C and has at that temperature a consistency, which may vary from soft and plastic to brittle and hard;
- if solid, then it is coarse to tine crystalline, transparant to opaque, but not glassy;
- melts without decomposition above 40°C;
- has a relatively low viscosity at a temperature which is something above the melting point;
- varies substantial in consistency and solubility by changing the temperature;
- can be polished by rubbing under light pressure.

The properties of waxy compounds are derived from Deutsche Gesellschaft für Fettwissenschaft (DGF)-inheitsmethoden, Abteilung M-Wachse (1975), as mentioned in Wax, an introduction, R. Sayers, European wax federation, 1983, pages 15/16.

Applicant has found that the use of a resin-free carrier not agglomerated with the pigment resulted in the shape of the pigment particles during the extrusion and grinding steps probably still being substantially retained: the fact is that, by using, for example a pigment having a light interference effect, a coating having very marked brightness was obtained. Hitherto, the only way of obtaining a coating having a similar brightness was to add the pigments in question to the powder coating composition after the extrusion stage. By using a carrier according to the invention it is now for example possible to form a powder paint composition which is immediately suitable for use, since all the constituents, blended together, can be subjected to extrusion without this being at the expense of the end result aimed for.

According to an expedient preferred embodiment, the waxy compound present in the pigment-containing powder coating composition according to the invention is compatible with the powder coating composition.

The presence of the waxy compound compatible with the powder coating composition affords excellent results, in particular, in hammer effect coatings.

It should be noted that a hammer effect is obtained if the powder coating composition is admixed with a so-called crater additive. Such an additive causes surface defects in the paint layer while this is baked.

A result of adding aluminium pigment, in particular, is that if a powder coating composition according to the invention is used, a coating layer having a brilliant (bright) hammer effect is obtained. The aluminium pigment used can be of any type, both the "leafing" and the "non-leafing" types, and of various particle sizes, for example of 10-50 µm, in particular about 30 µm.

It should be noted that each particle size (or range thereof) will produce a particular, specific colour or colour effect in the coating layer obtained after hardening. By also adding another pigment or colorant to the powder coating composition it is possible to form a hammer effect of a different hue.

Preferably, the waxy compound is a waxy alcohol having 14-50 carbon atoms, in particular cetyl alcohol, stearyl alcohol or a mixture thereof.

According to another preferred embodiment of the pigment-containing powder coating composition according to the invention, the waxy compound is incompatible with the powder paint composition. It should be noted that within the scope of the present invention, the term "incompatible" means that the compound in question tries to segregate during the hardening process of the powder coating composition applied as a coating layer and tries to migrate towards the (free) surface ("floats up"). Of course, this should not result in any flatting effect.

A compound of this type is found, surprisingly, to afford a combination of attractive advantages: during the extrusion, the waxy compound provides protection to the lamellar pigment, the laminar shape thereby being substantially retained; during baking at elevated temperature, however, the property of the incompatibility with the powder coating composition does result, or so applicant assumes for the time being, in the combination of waxy compound and lamellar pigment arriving more or less in the surface layer of the coating layer and affording the beneficial light interference effect after hardening.

Said last-mentioned behaviour moreover results in less pigment being required to obtain a particular effect, compared with the powder coating compositions produced in accordance with the prior art, in particular the abovementioned "dry-blend" process. The fact is that in practice it proved possible, when using a pigment preparation according to the invention, for the required amount of pigment to be considerably reduced, sometimes down to 10%, compared with a pigment preparation which had been produced according to the so-called "dry-blend" process, to obtain a similar result.

Preferably, the waxy compound used which is incompatible with the powder coating composition is an amide wax, more particularly stearylstearamide, ethylene bis-stearamide, or a mixture thereof.

Instead of an amide wax, the waxy compound can be a natural-base ester, in particular cetyl palmitate.

Waxy compounds of this type are suitable, in particular, in forming smooth coatings; as a matter of fact, applicant found that the lamellar pigments were able substantially to retain their preferential direction of orientation in the coating and therefore were able to exercise the desired light interference effect in the presence of a waxy compound as indicated hereinabove.

It should be noted that the thermosetting resin used can, for example, be a polyester resin, an epoxy resin, an epoxy/polyester resin, a polyurethane resin or an acrylate resin. The hardeners required for resins of this type are generally known to those skilled in the art.

Expediently, the ratio of the amount of lamellar pigment to resin-free carrier not agglomerated with the pigment in a pigment-containing powder coating composition according to the invention is from 20:80% to 80:20%, and the total amount of pigment and carrier with respect to the powder paint blend to be extruded is about 1:15 parts by weight. Preferably, the amount of resin-free carrier not agglomerated with the pigment in the finished powder coating composition is at least 0.5%. Especially if the incompatible waxy compounds mentioned hereinabove are used, excellent results are then obtained.

Another aspect of the invention resides in providing a pigment preparation which is suitable, in particular, for forming a coating composition by extrusion, wherein the preparation comprises a blend of pigment particles having a special effect and of a resin-free carrier which protects the pigment having a special effect and is not agglomerated with the pigment.

Preferably, the pigment having a special effect is lamellar, and consists the special effect of a light interference effect and/or is the pigment electrically conductive.

Surprisingly, applicant found that if a pigment preparation as mentioned hereinabove is added, better protection of the lamellar pigments was obtained than if the constituents (pigment and resin-free carrier) were supplied separately to the extruder.

Although an explanation for this effect is not entirely clear as yet, it could be the case that even during extrusion the pigment remains completely coated with the resin-free carrier and thus prevents the lamellar structure of the pigment particles from being broken up by the forces exerted during extrusion.

It will be obvious for an expert that, although the preparation according to the invention is especially suitable for the preparation of a powder coating composition due to extrusion processing necessary for it, the preparation is also suitable to be used in those cases, where during the preparation a grinding step is present, which usually causes a damage to the base structure of the pigment. As has been explained above, such a damage to the structure has the effect that the special effect can be lost.

Expediently, the resin-free carrier which protects the pigment having the special effect and is not agglomerated with the pigment is a waxy compound having a softening point of between 40°C and 145°C.

According to a preferred embodiment, the pigment is a floccular metal pigment and the waxy compound is compatible with the powder paint composition; in particular, the waxy compound is a waxy alcohol having 14-50 carbon atoms, such as cetyl alcohol, stearyl alcohol or a mixture thereof, and the metal pigment comprises aluminium flakes having a size of 20-40 µm.

According to another preferred embodiment, the pigment is a mica pigment and the waxy compound is incompatible with the powder coating composition. In particular, the waxy compound is an amide wax, in particular stearylstearamide, ethylene bisstearamide, or a mixture thereof, or is a natural-base ester, such as cetyl palmitate.

It should be noted that it was found, surprisingly, that if a preparation containing such a mica pigment is used in a powder coating composition it is possible to form a coating having an excellent mother-of-pearl effect; in contrast, when the mica pigment and the waxy carrier were fed separately to the extruder it was necessary to employ a much greater amount of mica pigment to obtain a similar mother-of-pearl effect.

Even though the pigment preparation, as described hereinabove, can be formed by physical blending of the two constituents, a preferred embodiment comprises the pigment being blended with a waxy compound in the molten state.

More particularly, the method for preparing a pigment preparation according to the invention involves a lamellar pigment being blended with a waxy compound in the molten state, the blend thus obtained is allowed to solidify and, if required, being comminuted to obtain a particulate pigment preparation.

Finally, the invention relates to use of a blend of a waxy compound having a softening point of at least 40°C and at most 145°C and of a lamellar pigment for dyeing a powder coating composition to be extruded, as described hereinabove. Expediently, the amount of lamellar pigment in a blend of this type is 20-80%, in particular 40-60%.

The invention is illustrated below on the basis of a few examples.

### Example 1

### Preparation of a hammer effect powder coating layer:

The starting material used was a polyester powder coating composition known per se, consisting of (in parts by weight):
- 250: parts of polyester resin
- 18.8: parts of hardener TGIC (triglycidyl isocyanurate)
- 1.5: parts of flow control agent
- 2: parts of degassing agent
- 0.4: parts of crater additive
- 70: parts of filler.

This composition was admixed with a blend consisting of 60% stearyl alcohol and 40% aluminium flakes having a size of ± 30 µm in an amount of 7%, based on the total powder coating composition. The blend obtained was extruded, ground and screened to obtain a powder having a particle size of 15-70 µm. This powder blend was sprayed electrostatically onto a metal plate and hardened at 200°C. The end result was a paint layer with a brilliant (bright) hammer finish.

By admixing the powder blend to be extruded with a different pigment each time, it is possible to obtain a hammer effect of, for example, a pastel hue.

It should be noted that, depending on the eventual use, there exist roughly five different resin systems, namely those based on 1) epoxy, 2) epoxy/polyester (the so-called hybrid systems), 3) polyester/TGIC (triglycidyl isocyanurate) or HAA (tetra-β-hydroxyalkylamide) (as a crosslinking agent), 4) polyurethane and 5) acrylates. The epoxy/polyester systems mainly serve as a coating of general industrial equipment and apparatuses to be fitted indoors, while the polyester/TGIC or HAA systems are predominantly employed for outdoor use. In fact, polyester-based resin systems can be used fairly universally.

The replacement of the above-illustrated polyester/TGIC resin systems by one of the other resin systems mentioned produces a similar effect.

### Example 2

### Preparation of smooth coatings.

A polyester/TGIC formulation and an epoxy/polyester formulation were formed which consisted, respectively, of (in parts by weight):
a)
   - 250: parts of polyester resin
   - 18.8: parts of hardener TGIC (triglycidyl isocyanurate)
   - 4: parts of flow control agent
   - 2: parts of degassing agent
   - 3: parts of carbon black pigment.
b)
   - 145: parts of polyester resin
   - 145: parts of epoxy resin
   - 4: parts of flow control agent
   - 2: parts of degassing agent
   - 3: parts of carbon black pigment.

Both formulations were admixed with a blend consisting of 40% Irodin 9103 (mica pigment) and 60% carrier (stearylstearamide) in an amount of about 20 parts by weight and blended to obtain a homogeneous blend. This homogeneous blend was extruded, ground and screened to a particle size of 15-70 µm, after which the powder blend was electrostatically sprayed onto a metal plate and hardened at 200°C. The result in both powder coating systems was that the mica particles had clearly migrated towards the surface and produced a bright light interference effect.

## Claims

1. A pigment-containing, thermosetting powder coating composition which contains at least one type of pigment having a special effect and is produced by blending comminuted particles of a thermosetting resin, a hardener, customary additives and fillers, and the said pigment or a preparation containing the pigment, subjecting the blend thus obtained to extrusion at elevated temperature and then carrying out a cooling operation to obtain an extrudate, followed by crushing, grinding and screening said extrudate to obtain the said powder coating composition, wherein the blend to be extruded further includes a resin-free carrier which protects the pigment having the special effect and is not agglomerated with the pigment.

2. A pigment-containing powder coating composition according to claim 1, wherein the pigment having the special effect is a lamellar pigment, preferably selected from the group consisting of metal flakes and mica pigments.

3. A pigment-containing powder coating composition according to claim 2, wherein said pigment has a light interference effect and/or is electrically conductive.

4. A pigment-containing powder coating composition according to claims 1 to 3, wherein the resin-free carrier which protects the pigment having the special effect and is not agglomerated with the pigment is a waxy compound, preferably having a softening point of at least 40°C and at most 145°C.

5. A pigment-containing powder coating composition according to claim 4, wherein the waxy compound is compatible with the powder coating composition.

6. A pigment-containing powder coating composition according to claims 4 or 5, wherein the waxy compound is a waxy alcohol having 14-50 carbon atoms, in particular cetyl alcohol, stearyl alcohol or a mixture thereof.

7. A pigment-containing powder coating composition according to any of the claims 1 to 6, comprising a thermosetting resin, a hardener, customary additives and fillers, wherein the composition, in addition to a crater additive, further contains aluminium flakes having a size of 10-50 µm and also stearyl alcohol.

8. A pigment-containing powder coating composition according to claim 4, wherein the waxy compound is incompatible with the powder coating composition.

9. A pigment-containing powder coating composition according to claim 8, wherein the waxy compound is an amide wax, in particular stearylstearamide, ethylene bis-stearamide, or a mixture thereof.

10. A pigment-containing powder coating composition according to claim 8, wherein the waxy compound is a natural-base ester, in particular cetyl palmitate.

11. A pigment-containing powder coating composition according to one or more of claims 1 to 4, 8 to 10, comprising a thermosetting resin, a hardener, customary additives and fillers, wherein the composition, further contains a mica pigment and also stearylstearamide.

12. A pigment-containing powder coating composition according to one or more of claims 1 to 11, wherein the ratio of the amount of lamellar pigment to resin-free carrier not agglomerated with the pigment is from 20:80% to 80:20%, and the total amount of pigment and carrier with respect to the powder coating blend to be extruded is about 1:15 parts by weight.

13. A pigment-containing powder coating composition according to claim 12, wherein the amount of resin-free carrier not agglomerated with the pigment in the finished powder coating composition is at least 0.5%.

14. Object coated with a powder coating, formed by use being made of a powder coating composition according to one or more of claims 1 to 13.

15. A pigment preparation, suitable in particular for forming a coating composition by extrusion, wherein the preparation comprises a blend of pigment particles having a special effect and a resin-free carrier which protects the pigment having a special effect and is not agglomerated with the pigment.

16. A pigment preparation according to claim 15, wherein said pigment is a lamellar pigment.

17. A pigment preparation according to claims 15 or 16, wherein said pigment has light interference effect and/or is electrically conductive.

18. A pigment preparation according to any of the claims 15 to 17, wherein the resin-free carrier which protects the pigment having the special effect and is not agglomerated with the pigment is a waxy compound having a softening point of between 40°C and 145°C.

19. A pigment preparation according to any of the claims 15 to 18, wherein the pigment is a floccular metal pigment and the waxy compound is compatible with the powder coating composition.

20. A pigment preparation according to one or more of claims 15 to 19, wherein the waxy compound is a waxy alcohol having 14-50 carbon atoms, in particular cetyl alcohol, stearyl alcohol or a mixture thereof.

21. A pigment preparation according to one or more of claims 15 to 20, wherein the metal pigment comprises aluminium flakes having a size of 20-40 µm.

22. A pigment preparation according to one or more of the claims 15 to 18, wherein the pigment is a mica pigment and the waxy compound is incompatible with the powder coating composition.

23. A pigment preparation according to one or more of the claims 15 to 18 or 22, wherein the waxy compound is an amide wax, in particular stearylstearamide, ethylene bis-stearamide, or a mixture thereof.

24. A pigment preparation according to one or more of the claims 15 to 18 or 22, wherein the waxy compound is a natural-base ester, in particular cetyl palmitate.

25. A method for preparing a pigment preparation according to one or more of claims 15 to 24, wherein a lamellar pigment is blended with a waxy compound in the molten state, the blend thus obtained is allowed to solidify and, if required, is comminuted to obtain a particulate pigment preparation.

26. Use of a blend of a waxy compound having a softening point of at least 40°C and at most 145°C and of a lamellar pigment for dyeing a powder coating composition to be extruded.

27. Use according to claim 26, wherein the waxy compound is selected from a waxy alcohol having 14-50 carbon atoms or an amide wax.

28. Use according to claim 26 or 27, wherein the waxy compound is selected from cetyl alcohol, stearyl alcohol or a mixture thereof, stearylstearamide, ethylene bis-stearamide and cetyl palmitate.

29. Use according to one or more of claims 26 to 28, wherein the amount of lamellar pigment in the blend is 20-80%, in particular 40-60%.
